Europäisches Patentamt

European Patent Office

Office européen des brevets

(11) Publication number: 0 227 200
A1

# (12) EUROPEAN PATENT APPLICATION

(21) Application number: 86303003.7

(22) Date of filing: 21.04.86

(51) Int. Cl.⁴: A47J 31/06

(30) Priority: 18.12.85 GB 8531208

(43) Date of publication of application:
01.07.87 Bulletin 87/27

(84) Designated Contracting States:
DE FR GB NL SE

(71) Applicant: W.M. STILL & SONS LIMITED
Fellows Road Hastings
East Sussex, TN34 3TX(GB)

(72) Inventor: Hayes, Cecil
17 Ashford Way
Hastings East Sussex(GB)
Inventor: Snowball, Malcolm Robert
8 Regency Gardens
St. Leonards-on-Sea East Sussex(GB)

(74) Representative: Allen, Oliver John Richard et
al
Lloyd Wise, Tregear & Co. Norman House
105-109 Strand
London, WC2R 0AE(GB)

(54) **Tea making apparatus.**

(57) Tea making apparatus of the type comprising of the means for suppliying heated water over a device (22) for holding a bed of tea leaves. In accordance with the invention, means (18) are provieded for delaying the passage of the heated water through the bed of tea leaves for a period of time in excess of one minute during which hot water is in contact with the tea leaves before the tea beverage is discharged for drinking. This gives a good extraction of tea flavour from the tea leaves into the hot water and provides tea of highly acceptable quality.

Fig.4.

# TEA MAKING APPARATUS

This invention relates to tea making apparatus.

Hitherto it has not been possible to produce high quality tea beverage in apparatus similar to a coffee brewer, in which hot water is poured over a bed of tea leaves, primarily we believe because the hot water does not remain in contact with the tea leaves for a sufficient time.

The general object of this invention is, therefore, to enable tea making apparatus to be produced or a coffee brewer adapted so as to be able to make reasonable quality tea beverage.

Tea making apparatus in accordance with this invention comprises means for supplying heated water over a device for holding a bed of tea leaves, wherein means are provided for delaying the passage of the heated water through the bed of tea leaves giving, for example, a time in excess of about one minute during which the hot water is in contact with the tea leaves before the tea beverage is discharged for drinking. This gives a good extraction of tea flavour from the leaves into the hot water and provides tea of highly acceptable quality. Preferably the brew time is at least two minutes.

The means for delaying the passage of water through the bed, may, for example comprise a syphon tube, the inlet to which is located below, but closely adjacent to, the bottom surface of the tea leaf bed and adjacent the bottom of a receptacle surrounding the device for holding the bed, the tube extending up to a position rear the top of the bed of leaves and then bending over and extending downwardly so that its outlet is below its inlet and extends through the bottom of the receptacle. The arrangement is such that as hot water reaches the tea bed it is held in the receptacle and cannot discharge until its level within the receptacle has risen to the height of the syphon tube bend well above the bottom of the bed. The water saturating the bed is thus maintained in contact with the tea leaves until the water level reaches the top of the syphon tube. All the water is then discharged through the syphon tube after passing through the bed. It is possible to arrange the height and diameter of the syphon tube and the rate of introduction of hot water so that contact time of water on the leaves is at least one minute.

To maintain the brew liquid level and hence, the soak (or brew) of the tea leaves, the arrangement is preferably such that the water inflow is balanced with the water outflow by appropriate choice of the discharge pipe (syphon tube) diameter.

During discharge, the tea leaves are retained in their bed and virtually all of the hot liquor is discharged from the bottom of the bed through and out from, the syphon tube.

A filter paper would normally be provided within a basket to receive the bed of tea leaves.

An outer vessel is preferably provided to surround the hot water receptacle to provide double skin thermal insulation to minimise cooling of the beverage during brewing.

The syphon tube is preferably arranged between the receptacle holding the hot water before discharge through the bed and the outer vessel. Thus the tea beverage is not cooled quickly during its discharge through the tube as the tube is heated to some extent by the hot water within the receptacle and due to the double insulation effect beteen the receptacle and the outer vessel.

It will be appreciated that the apparatus could be used either for making tea or coffee depending upon the substance present in the bed. Tea bags may be used as well as tea leaves or if coffee is to be produced this may either be ground coffee or instant coffee.

Instead of employing a syphon tube to ensure the necessary dwell time for the hot water on the tea leaf bed other devices may be employed. For example, the receptacle containing the filter paper and bed of tea leaves, may be made buoyant and designed to float or move upwardly within an outer vessel as the level of hot water in the receptacle rises. A small outlet is provided from the inner to the outer vessel so that hot water, after passage through the bed may leak out from the small outlet to the outer vessel and when the level of the tea beverage in the outer vessel is sufficiently high the inner vessel will float upwardly and this upward movement is arranged to open an outlet in the outer vessel to permit discharge of beverage.

As a further alternative a valve operated by a float positioned within the receptacle may be provided, the float moving to open the discharge outlet when the hot water level within the receptacle reaches a predetermined height.

The invention will now be further described by way of example with reference to the accompanying drawings in which:-

Figure 1 is a diagrammatic view of a standard coffee brewer modified in accordance with this invention for the production of tea beverage,

Figure 2 is a view to an enlarged scale of part of the apparatus shown in Figure 1.

Figure 3 is a view corresponding to Figure 2 in which tea is shown discharging from the tea leaf bed.

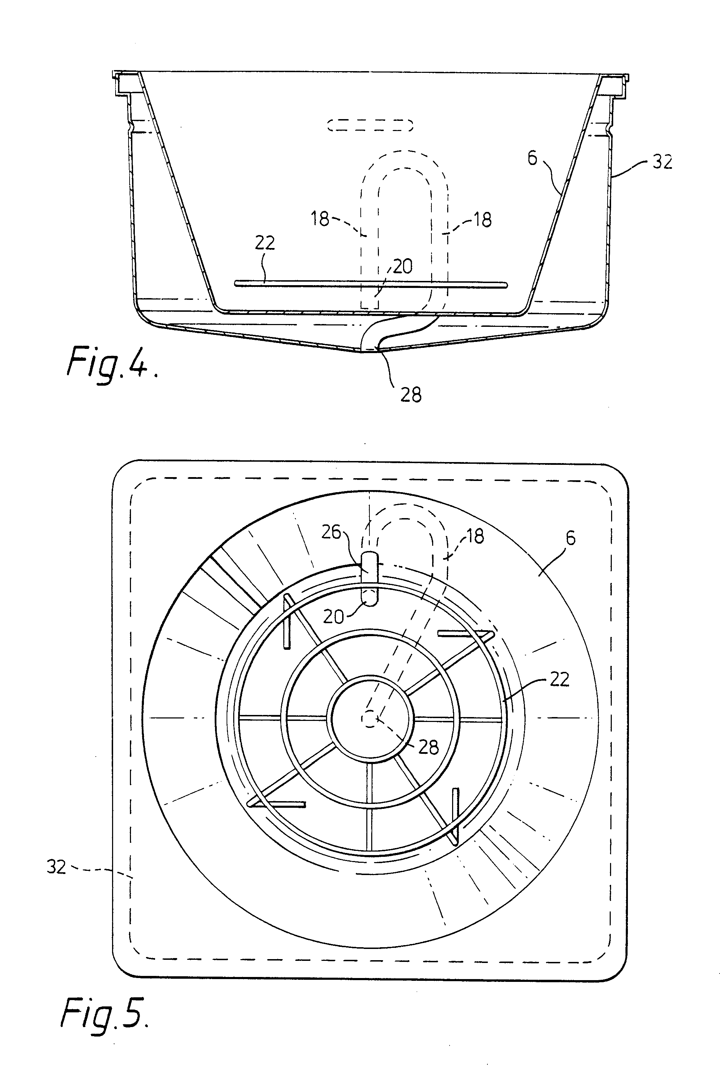

Figure 4 is a section through a modified embodiment of the unit shown in Figure 2, and

Figure 5 is a plan view corresponding to Figure 4.

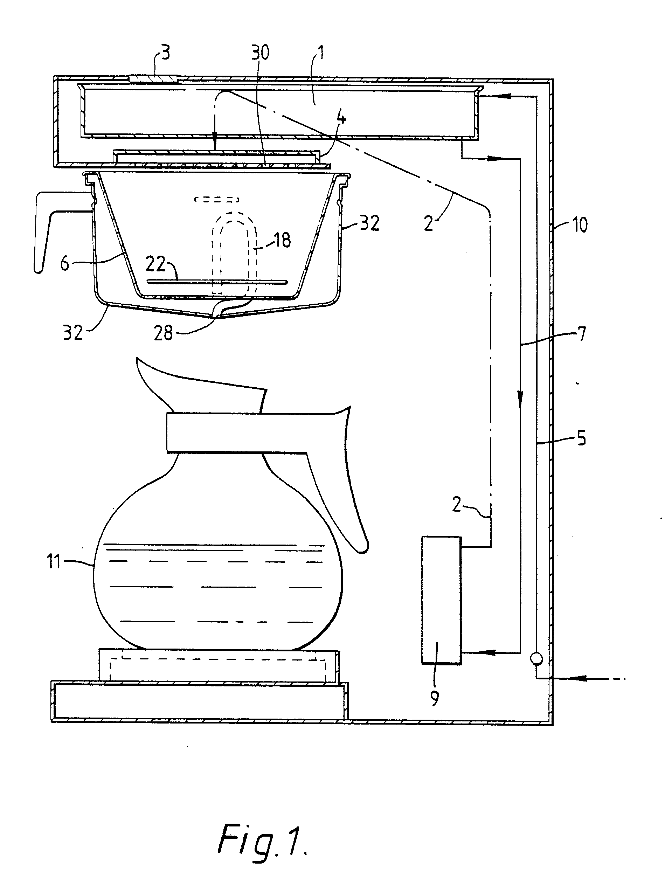

Figure 1 shows generally a standard coffee brewing apparatus which has been modified for the production of tea. The apparatus essentially comprises a tank 1 for containing cold water supplied to it either manually through an inlet 3 or from the mains through a pipe 5. When it is desired to produce liquor from the apparatus, water is discharged from the tank 1 through a pipe or conduit 7 to a heater 9 which is energised rapidly to increase the temperature of the water to boiling point. The heater 9 is connected through a conduit 2 shown in dot and dash lines to a spray head 4, hot water emerging through outlet holes 30 on to tea leaves contained within a removable receptacle 6 as described hereafter.

After passing through the bed of tea leaves, tea liquor emerges through an outlet 28 as described hereafter to be received in a removable jug or the like 11.

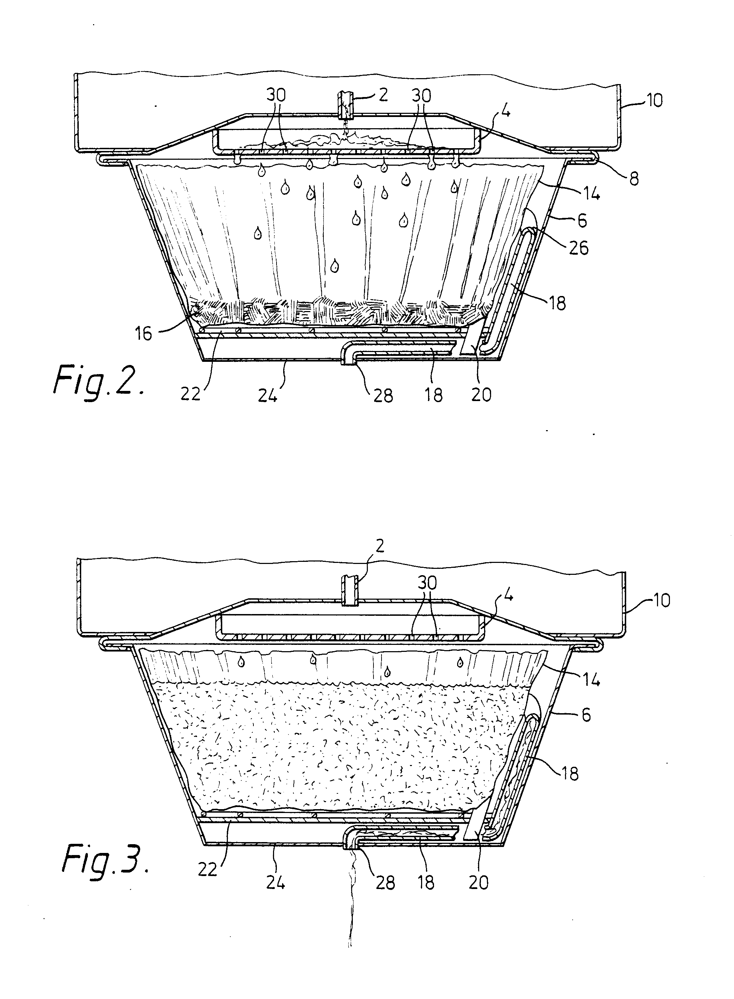

Referring to Figure 2 the receptacle 6 may be slid out from the frame 10 and a basket 12 mounted therein may be provided with a filter paper 14 to carry tea leaves to form a tea leaf bed 16.

A syphon tube 18 extends upwardly from an inlet 20 positioned just below a base plate 22 supporting the filter paper and adjacent the bottom wall 24 of the receptacle 6. The syphon tube 18 then extends upwardly between the filter paper 14 and the inner wall of the receptacle 6 to a point 26 where it bends over and descends downwardly again within the wall of the receptacle 6 to an outlet 28 below the inlet 20 and extending through the bottom wall 24 of the receptacle 6.

In use, hot water falls on to the bed of tea leaves 16 as illustrated in Figure 1 in the form of droplets through holes 30 in the spray head 4. These drops fall on the bed of tea leaves 16 and afterpassage through the bed accumulate on the base 24 of the receptacle. This continues until the water in the receptacle 6 saturates the bed and reaches the level of the bend 26 in the syphon tube. At this moment in time (see Figure 2) the bed of tea leaves is flooded with water as is the space in the receptacle below the bed of tea leaves. The rate of supply of hot water droplets on to the tea leaves and the height of the syphon tube 18 are made such that the water on average, is in contact with the bed of tea leaves for at least one minute, so as to ensure good extraction of flavour.

Equally the rate of inflow of hot water relative to the rate of outflow through the siphon tube is such that the liquid level in the bed of tea leaves is maintained enabling the brew or soak time also to be maintained during the period in which water is sprayed onto the bed. Subsequently, the tea liquor is all exhausted from the bed and from the siphon tube.

Once the water level has reached the bend 26 in the syphon tube it falls over the top of the tube and gets up the self-priming siphon to be discharged through outlet 28 in the form of tea beverage. This syphon action continues until virtually all the water in the tea bed and in the receptacle and indeed in the syphon tube itself has been discharged.

As may be seen with reference to Figure 3 the inner receptacle 6 is conveniently mounted within an outer vessel 32 to give double skin thermal insulation, the discharge outlet 28 of the syphon tube being through the bottom surface of the outer vessel 32. The tube inlet 20 is at the bottom of the inner receptacle so that virtually all tea liquor is discharged from the apparatus through the siphon tube.

As the syphon tube is located within thespace between the inner receptacle 6 and the outer vessel 6, it is heated by the hot water in the receptacle and when the syphon action commences, tea beverage being discharged through the tube is not unduly cooled.

It will be appreciated that various other ways of maintaining the hot water in contact with the tea leaf bed for a significant dwell period may be employed.

## Claims

1. Tea making apparatus comprising means for supplying heated water over a device for holding a bed of tea leaves charactered in that ·means are provided for delaying the passage of the heated water through a bed of tea leaves supported on the said device.

2. Tea making apparatus as claimed in Claim 1 in which the hot water is maintained in contact with the tea leaves in the bed for a period in excess of about one minute before discharge.

3. Tea making apparatus as claimed in Claim 1 or 2 in which the means for delaying the passage of water comprises a syphon tube, the inlet to which is located closely adjacent and beneath the surface forming the bottom of the tea leaf bed, the syphon tube extending up to a position well above the bottom of the bed of leaves and then bending over and extending downwardly so that its outlet is below its inlet.

4. Tea making apparatus as claimed in Claim 3 wherein the feed of hot water and the syphon tube dimensions are such that the hot water is maintained in contact with the tea leaves in the bed for a period in excess of about one minute before discharge.

5. Tea making apparatus as claimed in any one of the preceding claims wherein the device for holding the tea leaf bed is positioned within a receptacle to hold the hot water prior to discharge and the receptacle is itself mounted within an outer vessel for insulation.

6. Tea making apparatus as claimed in Claim 5 in which the siphon tube is positioned in the space between the inner receptacle and outer vessel.

Fig.1.

*Fig.2.*

*Fig.3.*

Fig.4.

Fig.5.

**European Patent Office**

## EUROPEAN SEARCH REPORT

| | DOCUMENTS CONSIDERED TO BE RELEVANT | | EP 86303003.7 |
|---|---|---|---|

| Category | Citation of document with indication, where appropriate, of relevant passages | Relevant to claim | CLASSIFICATION OF THE APPLICATION (Int. Cl.⁴) |
|---|---|---|---|
| X | DE - A1 - 2 829 775 (KAMSTRUP-LARSEN)<br><br>* Totality * | 1-6 | A 47 J 31/06 |
| X | AU - B1 - 36 740 /78 (MELITTA)<br><br>* Claim 1; fig. 2 * | 1-4 | |
| X | PCT - A1 - WO 85/00 506 (WIGO)<br><br>* Page 15, line 20 - page 21, line 7; fig. 1 * | 1,2 | |
| A | US - A - 3 473 463 (H.E. MC KNIGHT)<br><br>* Column 5, line 32; fig. 5 * | 3 | |
| | | | TECHNICAL FIELDS SEARCHED (Int. Cl.⁴) |
| | | | A 47 J 31/00 |

The present search report has been drawn up for all claims

| Place of search | Date of completion of the search | Examiner |
|---|---|---|
| VIENNA | 01-12-1986 | BEHMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82